# EUROPEAN PATENT APPLICATION

(11) **EP 3 571 912 A1**
(43) Date of publication of application: **27.11.2019**
(21) Application number: 19174325.1
(22) Date of filing: 14.05.2019
(51) Int. Cl.: A01B 69/04

(54) **METHOD AND SYSTEM FOR PLANNING A TURN PATH OF A VEHICLE**

(30) Priority: 15.05.2018 US 201815980562
(71) Applicant: Deere & Company, Moline, IL 61265 (US)
(72) Inventor: Liu, Qiang Ray, 68163 Mannheim (DE); Engel, Colin D, 68163 Mannheim (DE)
(74) Representative: Reichert, Christian

(57) **Abstract**

A method for planning a turn path of a vehicle (12) is disclosed. The method comprising: monitoring (108) coverage by at least one of the vehicle (12) and a second vehicle (80, 230); defining (110, 210) a headland region (26) of one or more headland passes (38) in a work area (32) between an exterior boundary (30) and a headland boundary edge (40); defining (112, 212) a plurality of track paths (34) extending in a generally parallel relationship and having a plurality of track path ends (36) disposed at an inner headland pass (38) of the headland region (26), the inner headland pass (38) having an edge defining the headland boundary edge (40);
determining (114) a turn start intersection point (44) defined by an intersection of a first track path (46) of the plurality of track paths (38) and the inner headland pass (38) at its corresponding edge; determining (116) a turn end intersection point (50) defined by an intersection of a second track path (52) of the plurality of track paths (34) and the inner headland pass (38) at its corresponding edge; and creating (118) a curved turn path (56) from the turn start intersection point (44) to the turn end intersection point (50) based on the coverage by the at least one of the vehicle (12) and a second vehicle (80, 230). Furthermore, a system (10) for planning a path of a vehicle (12) is disclosed.

## Description

### Technical Field

The present disclosure generally relates to a path planning method and system. An embodiment of the present disclosure relates to a coverage-based turn path planning method and system.

### Background

A path planner may be used to determine one or more path plans for a vehicle to cover a work area. The work area may represent a field for growing a crop or other vegetation. The vehicle may need to traverse the entire work area or a portion thereof to plant a crop, to treat a crop, to harvest a crop, or to perform another task associated with the crop or vegetation, to name non-limiting examples. Multiple vehicles may traverse the same work area to complete a task in the work area at the same time.

For some work areas, the boundary for the work area may be input to the vehicle before the vehicle executes a path plan and performs a task in the work area. However, high fidelity work area boundaries are not always available due to drift and/or other inaccuracies in global positioning systems (GPS), boundary recording errors, and/or other reasons. Further, the planting location of crops may not precisely follow field boundaries, thereby potentially causing gaps or overlaps of coverage near a boundary. Such boundary imprecision may cause a turn of a planned path to begin too early or end too late in operations after crop emergence, such as in product application and harvesting. Moreover, multiple vehicles performing the same task in a work area may inefficiently cover the same rows and repeat the work of each other. Accordingly, there exists a need for a system and a method for planning a path to allow one or more vehicle(s) to accurately and efficiently perform a task within a work area.

### Summary

Various aspects of examples of the present disclosure are set out in the claims.

According to a first aspect of the present disclosure, a method for planning a turn path of a vehicle is provided. The method includes monitoring coverage by at least one of the vehicle and a second vehicle, defining a headland region of one or more headland passes in a work area between an exterior boundary and a headland boundary edge, defining a plurality of track paths extending in a generally parallel relationship and having a plurality of track path ends disposed at an inner headland pass of the headland region, the inner headland pass having an edge defining the headland boundary edge, determining a turn start intersection point defined by an intersection of a first track path of the plurality of track paths and the inner headland pass at its corresponding edge, determining a turn end intersection point defined by an intersection of a second track path of the plurality of track paths and the inner headland pass at its corresponding edge, and creating a curved turn path from the turn start intersection point to the turn end intersection point based on the coverage by the at least one of the vehicle and a second vehicle.

According to a second aspect of the present disclosure, a system for planning a path of a vehicle is provided. The system includes a coverage monitor configured to monitor coverage by at least one of the vehicle and a second vehicle, a headland region identifier configured to establish a headland region of one or more headland passes in a work area between an exterior boundary and a headland boundary edge defined by the one or more headland passes, a track path identifier configured to establish a plurality of track paths extending in a generally parallel relationship and having a plurality of track path ends disposed at an inner headland pass of the headland region, the inner headland pass having an edge defining the headland boundary edge, a turn start intersection point generator configured to determine a turn start intersection point of a first track path of the plurality of track paths and the inner headland pass at its corresponding edge, a turn end intersection point generator configured to determine a turn end intersection point of a second track path of the plurality of track paths and the inner headland pass at its corresponding edge, and a curved turn path generator configured to establish a curved turn path from the turn start intersection point to the turn end intersection point based on the coverage by the at least one of the vehicle and the second vehicle.

According to a third aspect of the present disclosure, a method of planning a path for a vehicle configured to unload material to one of a right side of the vehicle and a left side of the vehicle is provided. The method includes defining a headland region of one or more headland passes in a work area within an exterior boundary, defining a plurality of track paths extending in a generally parallel relationship and having a plurality of track path ends disposed at the headland region, and generating a path pattern comprising one of repeating right turn directions between the plurality of track paths if the vehicle is configured to unload the material to the right side of the vehicle and repeating left turn directions between the plurality of track paths if the vehicle is configured to unload the material to the left side of the vehicle.

The above and other features will become apparent from the following description and accompanying drawings.

### Brief Description of the Drawings

The detailed description of the drawings refers to the accompanying figures in which:
FIGURE 1 is a schematic illustration of a system for planning a turn path of a vehicle in accordance with an embodiment of the present disclosure;
FIGURE 2 illustrates a graphical user interface of a system for planning a turn path of a vehicle in accordance with an embodiment of the present disclosure;
FIGURE 3 illustrates a graphical user interface of a system for planning a turn path of a vehicle in accordance with an embodiment of the present disclosure;
FIGURE 4 illustrates a graphical user interface of a system for planning a turn path of a vehicle in accordance with an embodiment of the present disclosure;
FIGURE 5 illustrates a graphical user interface of a system for planning a turn path of a vehicle in accordance with an embodiment of the present disclosure;
FIGURE 6 illustrates a graphical user interface of a system for planning a turn path of a vehicle in accordance with an embodiment of the present disclosure;
FIGURE 7 illustrates a method of planning a path of a vehicle in accordance with an embodiment of the present disclosure;
FIGURE 8 illustrates a system for planning a turn pattern in accordance with an embodiment of the present disclosure; and
FIGURE 9 illustrates a method of planning a turn path of a vehicle in accordance with an embodiment of the present disclosure.

Like reference numerals are used to indicate like elements throughout the several figures.

### Detailed Description

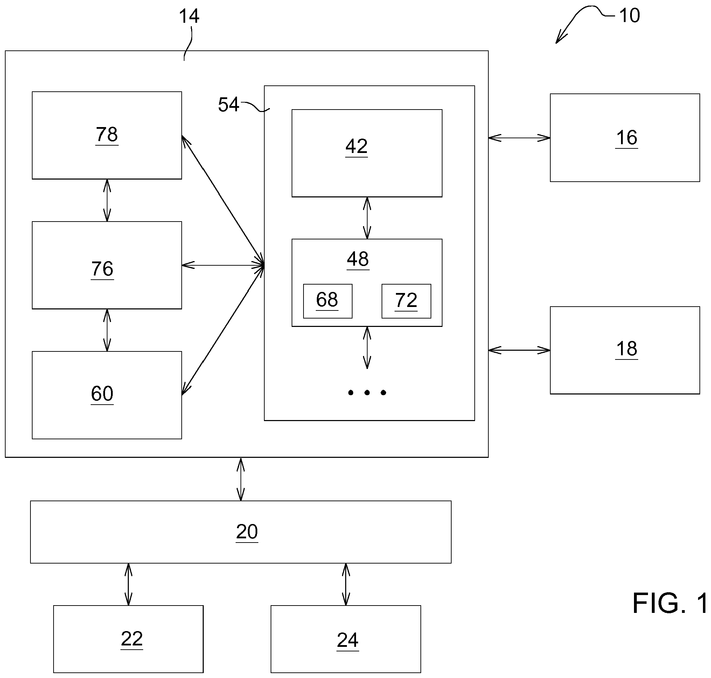

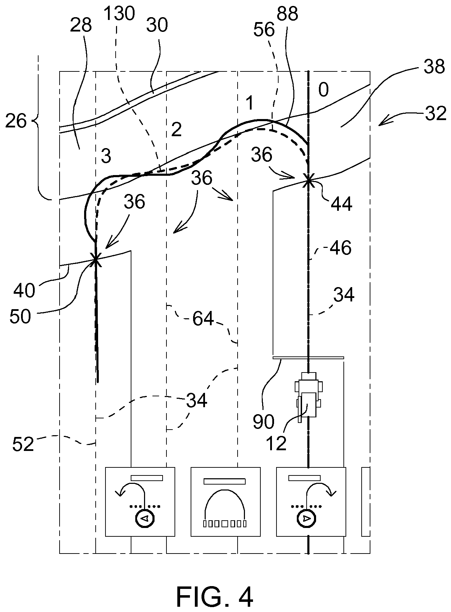

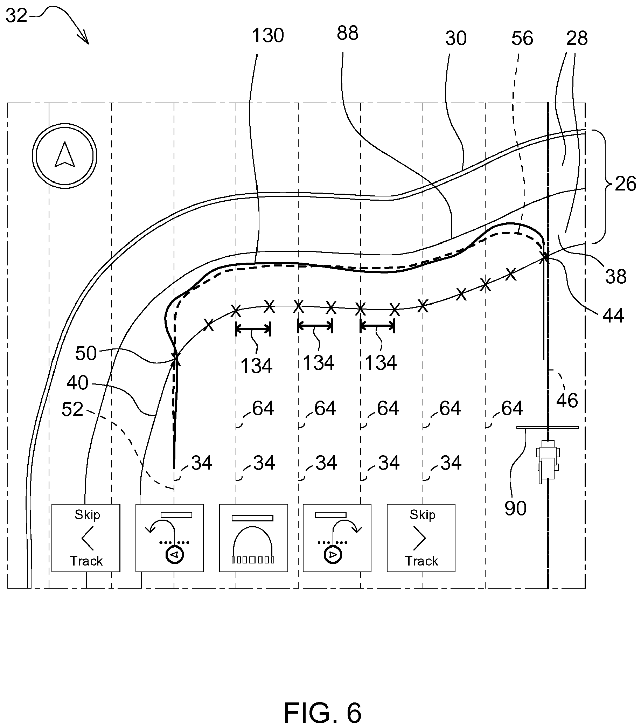

At least one example embodiment of the subject matter of this disclosure is understood by referring to FIGURES 1 through 9 of the drawings. Reference is now made to FIG. 1 of the present disclosure, which illustrates a system 10 for planning the path of a vehicle 12. The system 10 of FIG. 1 includes a path planner 14 that is coupled to a user interface 16, a location-determining receiver 18, and a vehicle controller 20 in one embodiment. In turn, the vehicle controller 20 may communicate with a steering system 22 and/or a propulsion system 24.

The vehicle controller 20 accepts input from the system 10 illustrated in FIG. 1. The vehicle controller 20 controls the vehicle 12 consistent with a path plan, unless the safeguarding system 18 detects an obstacle, obstruction, hazard, a safety condition, or another condition that requires the vehicle to depart from the planned path, to stop movement or take evasive measures to avoid a collision with an object or living being (e.g., a person or animal). The vehicle controller 20 may generate control signals for a steering system 20, a propulsion system 24, a braking system, a safeguarding system, and/or any other component or system that is/are consistent with tracking the path plan and subject to modification or interruption by the system 10 or another system. The control signals may comprise a steering control signal or data message that defines a steering angle of the steering shaft; a braking control signal or data message that defines the amount of deceleration, hydraulic pressure, or braking friction to the applied to brakes; a propulsion control signal or data message that controls a throttle setting, a fuel flow, a fuel injection system, vehicular speed or vehicular acceleration. Further, where the vehicle 12 is propelled by an electric drive or electric motor, the propulsion control signal may control or modulate electrical energy, electrical current, electrical voltage provided to an electric drive or motor. The control signals generally vary with time as necessary to track the path plan. The lines that interconnect the components of the system 10 may comprise logical communication paths, physical communication paths, or both. Logical communication paths may comprise communications or links between software modules, instructions or data, whereas physical communication paths may comprise transmission lines, data buses, or communication channels, to name non-limiting examples.

The steering system 20 may comprise an electrically controlled hydraulic steering system, an electrically driven rack and pinion steering, an Ackerman steering system, or another steering system. The propulsion system 24 may comprise an internal combustion engine, an internal combustion engine-electric hybrid system, an electric drive system, or the like. The braking system may comprise an electrically controlled hydraulic braking system, or another electrically controlled friction braking system. The safeguarding system may comprise an obstacle detection system, which includes one or more of the following components: an ultrasonic detector, a radar device, a laser obstacle detector, a liDAR device, a laser range finder, a vision obstacle detector, and a stereo vision detector.

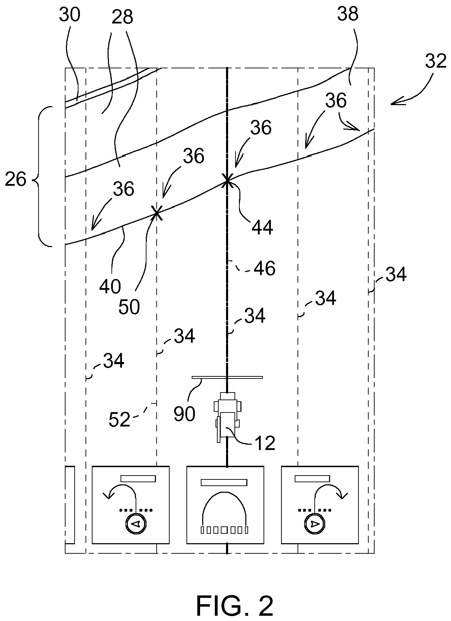

Referring now to FIG. 2 with continuing reference to FIG. 1, the path planner 14 of the system 10 includes a coverage monitor 60 configured to monitor coverage by the vehicle 12 and one or more other vehicle(s) in the work area 32. In the illustrated embodiment, the coverage monitor 60 determines where the vehicle 12 and/or any implement or work tool of the vehicle 12 has traveled and, therefore, covered. In an additional embodiment, the coverage monitor 60 also determines coverage of another vehicle and/or implement or work tool in the work area 32. As one non-limiting example, the illustrated embodiments show the coverage monitor 60 tracking coverage of an implement 90, such as a front implement on a combine or a towed planter by a tractor, as the implement 90 travels through the work area 32. The system 10 and/or the path planner 14 is configured and/or arranged to collect location data on one or more points in the work area 32. For example, the system 10 and/or the path planner 14 collects and stores, in an embodiment, location data (e.g., Global Positioning System coordinates) from the location-determining receiver 18 (e.g., GPS receiver with differential correction) as the vehicle 12 traverses the outer region of the work area 32 along the exterior boundary 30 and/or any other area of the work area 32. In one or more embodiments, the curved turn path generator 54 establishes the curved turn path 56 based further on the historic path traversed or the coverage by the vehicle 12 and any other vehicle in the work area 32. In an embodiment, the turn end intersection point generator 48 cooperates with the coverage monitor 60 to determine whether to execute a right turn or a left turn to establish the second track path 52. The coverage monitor 60 of an additional embodiment cooperates with the turn end intersection point generator 48 to determine whether to skip an intervening path 64 disposed adjacent to the first track path 46 or multiple intervening paths 64 disposed between the first track path 46 and the second track path 52.

The path planner 14 further includes a headland region identifier 78 configured to establish a headland region 26 of one or more headland passes 28 of an outer region associated with a work area 32. In the illustrated embodiment, the headland region identifier 78 establishes passes 28 in the work area 32 between an exterior boundary 30 and a headland boundary edge 40. In an embodiment, the headland region identifier 78 defines the one or more passes 28 along and inside of an exterior boundary 30 of the headland region 26. The headland boundary edge 40 of the illustrated embodiment is defined by an inner headland pass 38.

The system 10 includes a track path identifier 76 configured to establish track paths 34 that extend in a generally parallel relationship. The track paths 34 of the illustrated embodiments include at least a first track path 46 and a second track path 52. The track paths 34 have track path ends 36 disposed at the inner headland pass 38 of the headland region 26. The inner headland pass 38 includes the headland boundary edge 40.

The track path identifier 76 of the system 10 receives from an external source, calculates, generates, and/or otherwise defines, determines, and/or stores information for the first track path 46 and, in particular embodiments, one or more subsequent paths. In an embodiment, the vehicle 12 initially traverses the first track path 46, and the track path identifier 76 determines the first track path 46 based on the vehicle 12 movement and/or location. Further, in one or more additional embodiments, the track path identifier 76 defines, determines, and/or stores one or more other track paths, one or more headland paths, and/or any other areas from the vehicle 12 covering or traversing such areas. Any defining, determining, and/or storing of information relating to one or more areas covered or traversed may be processed, displayed, and/or stored on a coverage map and/or displayed to the operator of the vehicle 12 and/or transmitted or displayed to another location.

As illustrated in FIG. 2, the system 10 further includes a turn start intersection point generator 42 configured to determine a turn start intersection point 44 of a first track path 46 and the inner headland pass 38 at the headland boundary edge 40 of the inner headland pass 38. The system 10 further includes a turn end intersection point generator 48 configured to determine a turn end intersection point 50 of a second track path 52 and the inner headland pass 38 at the headland boundary edge 40 of the inner headland pass 38. The turn end intersection point generator 48 of the system 10 of particular embodiments of the present disclosure identifies or determines the second track path 52 before and/or after the vehicle 12 begins to traverse the first track path 46.

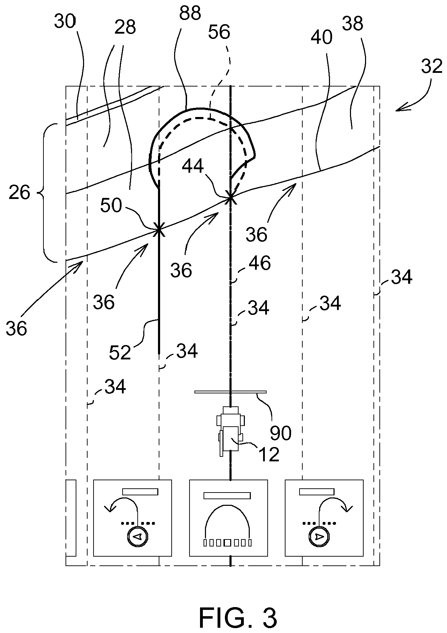

Referring now to FIGs. 3-6, the system 10 further includes a curved turn path generator 54 configured to establish a curved turn path 56 from the turn start intersection point 44 to the turn end intersection point 50 based on the coverage by the vehicle 12 and/or one or more other vehicles in the work area 32. In one embodiment, the curved turn path generator 54 is further configured to establish the curved turn path 56 to follow at least a portion or segment of a curve 58 of the headland boundary edge 40 of the inner headland pass 38. The curved turn path generator 54 creates the curved turn path 56 from the turn start intersection point 44 to the turn end intersection point 50 based on the headland boundary edge 40, as established by coverage determined by the coverage monitor 60. Specifically, in a particular embodiment, the curved turn path generator 54 creates the turn path 56 such that the vehicle 12 remains between the exterior boundary 30 and the headland boundary edge 40 as the vehicle 12 traverses the entire curved turn path 56. The curve 58 in an illustrated embodiment is an arc that the curved turn path 56 intercepts at three or more points. The curve 58 is configured to allow a swath of the vehicle 12 to remain in the headland region 26 during the execution or traversing of the curved turn path 56 by the vehicle 12.

In the illustrated embodiments, the system 10 also generates an implement turn path 88 indicating the planned path taken by an implement 90, such as a front implement on a combine or a towed planter by a tractor, to name non-limiting examples, during execution of the curved turn path 56 by the vehicle 12. In particular embodiments, the curved turn path 56 is configured to allow the swaths of both the vehicle 12 and the implement 90 to remain outside of the headland boundary edge 40 in the headland region 26 during the execution or traversing of the curved turn path 56. Should the vehicle 12 or the implement 90 travel beyond the exterior boundary 30 outside of the headland region 26, an alert signal and/or other action may be initiated by the system 10 and/or vehicle 12 in one or more embodiments. In one embodiment, upon initiation of an alert signal or warning, the system 10 instructs or expects the operator to take control and/or acknowledge the warning or alert and continue on the path. In a further embodiment, the system 10 initiates corrective control of the vehicle 12 upon travel of the vehicle 12 or implement 90 beyond the exterior boundary 30. In a particular embodiment of any method or system described herein, the vehicle 12 is equipped with an obstacle detection system. Foundational items, such as guidance and turn path generation to name non-limiting examples, provide the obstacle avoidance or corrective action as part of the method or system in the particular embodiment.

In one or more embodiments, the curved turn path generator 54 cooperates with the coverage monitor 60 to establish the curved turn path 56 based on the historic path traversed or the coverage by the vehicle 12 and any other vehicle in the work area 32. In an embodiment, the turn end intersection point generator 48 cooperates with the coverage monitor 60 to determine whether to execute a right turn or a left turn to establish the second track path 52. The coverage monitor 60 of an additional embodiment cooperates with the turn end intersection point generator 48 to determine whether to skip an intervening path 64 disposed adjacent to the first track path 46 or multiple intervening paths 64 disposed between the first track path 46 and the second track path 52.

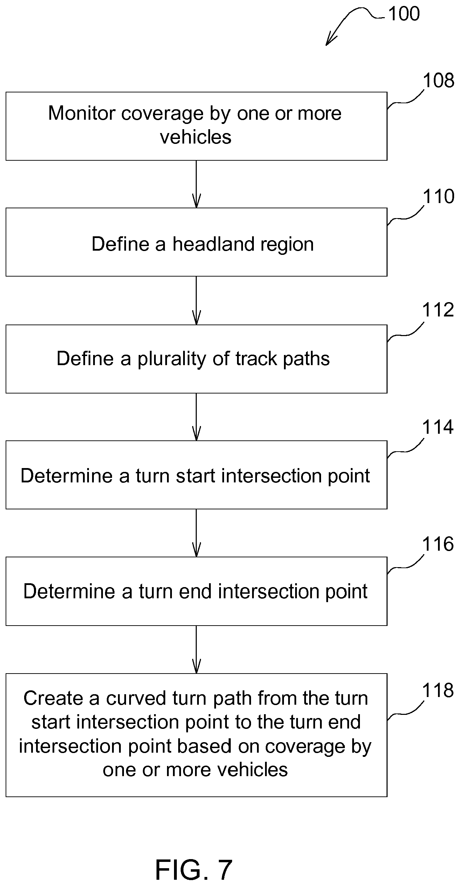

Referring now to FIG. 7, a method 100 of planning the curved turn path 56 of one or more embodiments is illustrated. The method 100 of one or more embodiments includes any one or more structures or steps described with regard to one or more embodiments of the system 10 described herein. The method 100 includes monitoring coverage, at step 108, by the vehicle 12 and/or another vehicle in the work area 32. The method 100 includes defining, at step 110, the headland region 26 of one or more passes 28. In an embodiment, defining the headland region 26 includes defining the one or more passes 28 within the headland region 26. While the passes 28 of one or more embodiments occur in the headland region 26, along a boundary of the work area 32 herein, in one or more additional embodiments, the passes 28 are located outside of the headland region 26 and/or the headland of the work area 32 and is not located adjacent to, near, or along a boundary of the work area 32. Rather, the passes 28 and/or the defined headland region 26 is/are located at any area, including a central area in a non-limiting example, of the work area 32. In an embodiment, the method 100 includes establishing the headland region 26 of one or more passes 28 by traveling along the one or more passes 28 to form the headland region 26. The method 100 further includes defining, at step 112, one or more track paths 34. The method 100 further includes determining, at step 114, the turn start intersection point 44 and determining, at step 116, the turn end intersection point 50.

The method 100 further includes creating, at step 118, the curved turn path 56 from the turn start intersection point 44 to the turn end intersection point 50 based, at least in part, on the coverage by the vehicle 12 and/or another vehicle in the work area 32. The method 100 of an embodiment further includes creating the curved turn path 56 to follow at least a portion of the curve 58 of the headland boundary edge 40 of the inner headland pass 38 to allow the swath of the vehicle 12 to remain in the headland region 26 during the execution or traversing of the curved turn path 56. Creating the curved turn path 56 of an embodiment includes creating a transitional turn path portion 130 in an embodiment. The method 100 further includes spacing the transitional turn path portion 130 from the headland boundary edge 40 of the inner headland pass 38 by at least a predetermined distance 134. In an illustrative embodiment, the predetermined distance 134 is half of a track spacing or width of a track path 34. In further embodiments, the predetermined distance 134 maybe greater than or less than half of a track spacing or width of the track path 34.

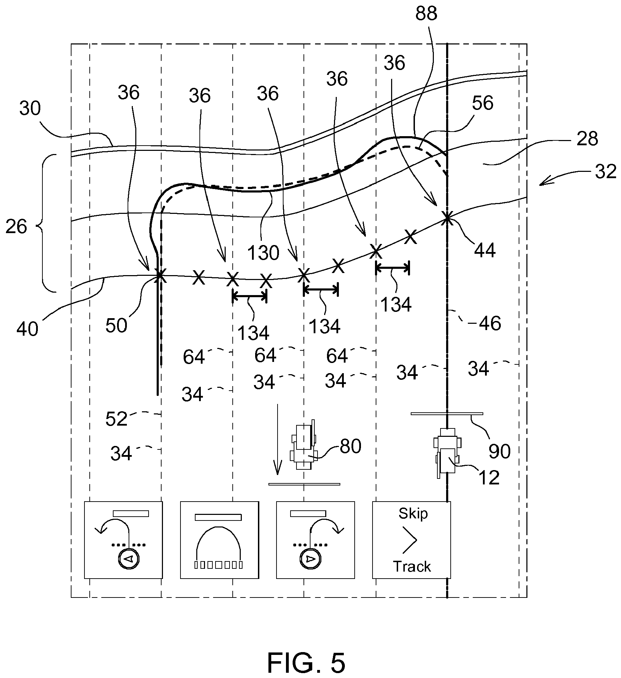

In particular embodiments, an additional vehicle 80, such as a second combine in a non-limiting example, may traverse the work area 32 at a separate location of the work area 32 from the vehicle 12, as illustrated in FIG. 5. The system 10 of an embodiment recognizes, receives, or otherwise determines the area covered by the additional vehicle 80 in addition to any area covered by the vehicle 12. In an embodiment, the vehicle 12, and, if present, the one or more additional vehicles 80 in the work area 32, communicates with the coverage monitor 60 and/or maintain(s) a master coverage map stored in its data storage device or memory that is updated from the coverage of all vehicles in the work area 32. Such updating and/or other communication is performed through wireless communication, such as radio or satellite communication to name non-limiting examples. The system 10 receives or otherwise determines the location of the additional vehicle(s) 80 in the work area 32 in order to avoid selecting the second track path 52 as a track path already traversed, covered, or worked by the additional vehicle(s) 80. In one or more embodiments of the present disclosure, the vehicle 12 receives a wireless signal, such as by radio or satellite signal to name non-limiting examples, indicating the location of the additional vehicle(s) 80. The wireless signal received by the vehicle 12 may be used to populate the historic path tracker 60 for any coverage of the entire work area 32 or at least for the historic path covered or traversed by the additional vehicle(s) 80. In a non-limiting example, the coverage monitor 60 tracks and determines all coverage, including coverage along track paths by vehicles having different header or track widths, such that path or overall coverage is determined, regardless of track path. The track path identifier 76 and/or the turn end intersection point generator 48 of the system 10 may utilize the path information for one or more additional vehicle(s) 80 in order for the vehicle 12 and the system 10 to cooperate with the additional vehicle(s) 80 to most efficiently travel and/or perform tasks in the work area 32.

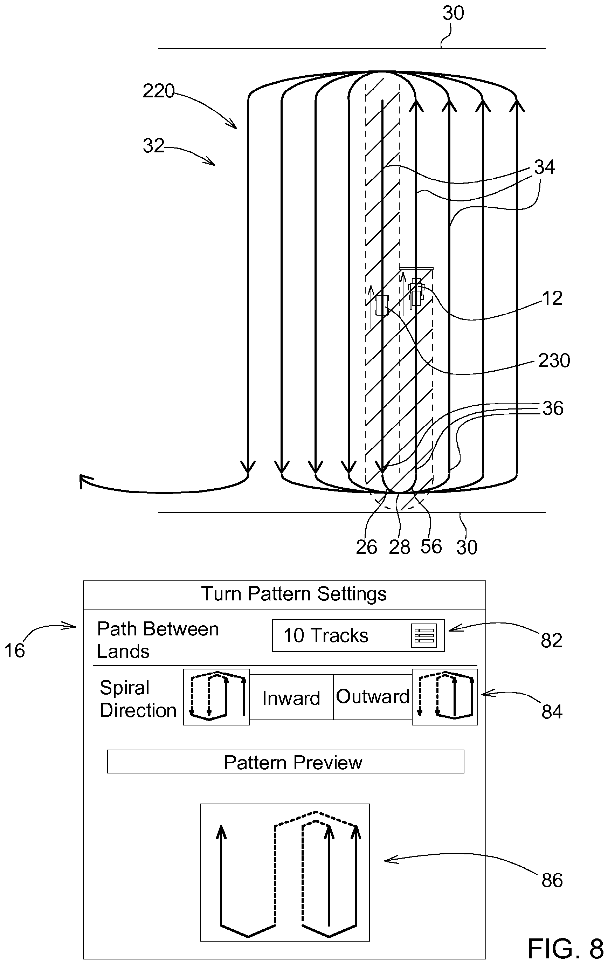

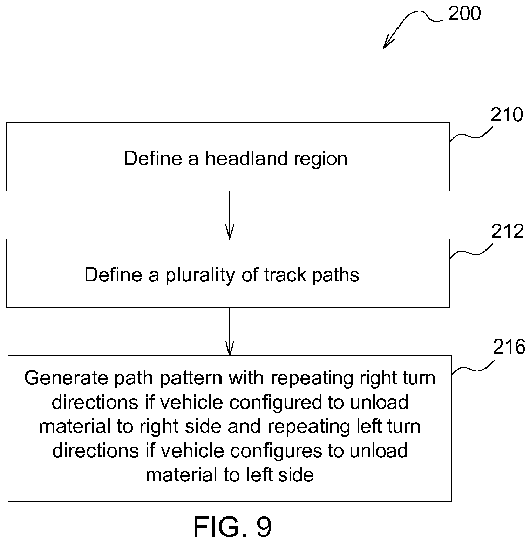

Referring now to FIGs. 8 and 9, with continuing reference to FIGs. 1-6, the system 10 of one or more embodiments further includes a turn pattern configuration to allow the vehicle 12 to execute a sequence of turn directions (left or right) and path skips at each turn in order to cover all or a portion of a work area 32. A turn pattern of the system 10 may be repeated over a work area 32 in accordance with operator input or other input.

With further reference to FIG. 8, FIG. 9 illustrates a method 200 of planning a path for the vehicle 12. It will be recognized that the method 200 described below and illustrated in FIGs. 8 and 9 may be utilized with any one or more embodiments of the system 10 and the method 100 described herein. The method 200 illustrated in FIGs. 8 and 9 includes defining, at step 210, the headland region 26 of one or more paths 28 in the work area 32 within the exterior boundary 30. The method 200 further includes defining, at step 212, parallel tracks having track path ends 36 disposed at the headland region 26. The method 200 further includes generating, at step 216, the path pattern 220. If the vehicle 12 is configured to unload material to the left side of the vehicle 12, as illustrated in FIG. 8, the path pattern 220 includes and the system 10 executes repeating left turn directions between track paths 34. If the vehicle 12 is configured to unload material to the right side of the vehicle 12, the path pattern 220 includes and the system 10 executes repeating right turn directions between track paths 34. FIG. 8 illustrates the path pattern 220 generated to include repeating left turns as the vehicle 12 is configured to unload material to the left side of the vehicle 12, and the accompanying vehicle 230 is in the track path immediately adjacent to the left side of the vehicle 12. However, although not shown, it will be appreciated that the path pattern 220 of another embodiment would include repeating right turns if the vehicle 12 is configured to unload material to the right side of the vehicle 12. In the illustrated embodiment, the vehicle 12 is a combine configured to harvest grain or another material from the work area 32, and the material being unloaded is grain, but one of ordinary skill in the art will recognize the diverse types of materials that may be unloaded from one of any type of vehicle or system executing a path plan in a work area, and all such materials form part of one or more embodiments of the present disclosure.

In an embodiment, the method 200 further includes skipping one or more intervening paths on the left side of the vehicle 12 if the vehicle 12 is configured to unload the material to the left side of the vehicle 12. In such an embodiment, the accompanying vehicle 230 may have access to the track path immediately adjacent to the left side of the vehicle 12. The method 200 further includes skipping one or more intervening paths on the right side of the vehicle 12 if the vehicle 12 is configured to unload the material to the right side of the vehicle 12. In such an embodiment, the accompanying vehicle 230 may have access to the track path immediately adjacent to the right side of the vehicle 12. The method 200, in cooperation with the system 10 and the method 100, therefore, of one or more embodiments allows the accompanying vehicle 230 to access the vehicle 12 because the open, covered side of the work area 32 remains on the unloading side of the vehicle 12. In the embodiment illustrated in FIG. 8, the system 10 generates and executes a path plan whereby the vehicle 12 begins in the middle of the work area 32, executes left turns repeatedly, and spirals outward in order to allow the grain cart to access the left side of the combine while the vehicle 12 covers the work area 32 efficiently.

The method 200 of a further embodiment includes generating the path pattern 220 to establish the curved turn path 56 to at least partially follow at least a portion or segment of the curve 58 of the headland boundary edge 40, the inner headland pass 38, and/or any other portion of the headland region 26 such that a vehicle swath remains in the headland region 26 while the vehicle 12 traverses the curved turn path 56.

As illustrated in FIG. 8, the user interface 16 allows a user to define a total number of track paths 34 to be included in the pattern (e.g., spiral) at area 82, a pattern or spiral direction (e.g., inward or outward) at area 84, and/or other settings. The user interface 16 displays a pattern preview 86 based on the user input. Following input from the user, the system 10 generates and executes the path plan according to the input. In accordance with an embodiment, when a current pattern is completed, the system 10 automatically transfers to the next start point and repeats the pattern.

Without in any way limiting the scope, interpretation, or application of the claims appearing below, a technical effect of the system 10 and the methods 100, 200 of one or more of the illustrated embodiments disclosed herein is the ability for the vehicle 12 to autonomously execute a path plan without having the work area boundary input beforehand. For such particular embodiments, the system 10 and/or vehicle 12 defines or determines the path plan and any track paths based at least partially on headland and/or track path coverage. Further, the system 10 and the methods 100, 200 of one or more embodiments disclosed herein increases the accuracy and reliability of the boundary of the work area, thereby reducing errors and increasing efficiency for the overall path plan. Even further, the system 10 and the methods 100, 200 of one or more embodiments of the present disclosure allow the vehicle 12 to cooperate with one or more additional vehicles to plan an efficient path through the entire work area. Additionally, the system 10 and the methods 100, 200 of one or more embodiments of the present disclosure allow an accompanying vehicle 230, such as a grain cart in a non-limiting example, to access the vehicle 12 during execution of a path plan such that the vehicle 12 may unload material while executing a path plan while the vehicle 12 avoids repeating coverage of one or more paths already covered by the vehicle 12 or another work vehicle in the work area 32. As such, the vehicle 12 efficiently covers or works the work area 32 with or without one or more other vehicles in the work area and with or without the input of a work area boundary.

While the present disclosure has been illustrated and described in detail in the drawings and foregoing description, such illustration and description is not restrictive in character, it being understood that illustrative embodiment(s) have been shown and described and that all changes and modifications that come within the spirit of the present disclosure are desired to be protected. Alternative embodiments of the present disclosure may not include all of the features described yet still benefit from at least some of the advantages of such features. Those of ordinary skill in the art may devise their own implementations that incorporate one or more of the features of the present disclosure and fall within the spirit and scope of the appended claims.

## Claims

1. A method for planning a turn path of a vehicle (12), the method comprising:
monitoring (108) coverage by at least one of the vehicle (12) and a second vehicle (80, 230);
defining (110, 210) a headland region (26) of one or more headland passes (38) in a work area (32) between an exterior boundary (30) and a headland boundary edge (40);
defining (112, 212) a plurality of track paths (34) extending in a generally parallel relationship and having a plurality of track path ends (36) disposed at an inner headland pass (38) of the headland region (26), the inner headland pass (38) having an edge defining the headland boundary edge (40);
determining (114) a turn start intersection point (44) defined by an intersection of a first track path (46) of the plurality of track paths (38) and the inner headland pass (38) at its corresponding edge;
determining (116) a turn end intersection point (50) defined by an intersection of a second track path (52) of the plurality of track paths (34) and the inner headland pass (38) at its corresponding edge; and
creating (118) a curved turn path (56) from the turn start intersection point (44) to the turn end intersection point (50) based on the coverage by the at least one of the vehicle (12) and a second vehicle (80, 230).

2. The method of claim 1, wherein defining (110, 210) the headland region (26) of one or more headland passes (38) includes defining the one or more headland passes (38) along and inside of the exterior boundary (30) line of the headland region (26).

3. The method of claim 1 or 2, wherein creating (118) the curved turn path (56) comprises creating (118) the curved turn path (56) to at least partially follow a curve of the headland boundary edge (40) such that a vehicle swath remains in the headland region (26) while the vehicle (12) traverses the curved turn path (56).

4. The method of one of the claims 1 to 3, wherein the first track path (46) is immediately adjacent to the second track path (52).

5. The method of one of the claims 1 to 4, further comprising determining whether to turn to the right or left to track the second track path (52) based at least partially on the coverage by the vehicle (12).

6. The method of one of the claims 1 to 5, wherein the first track path (46) is spaced from the second track path (52) by at least one intervening path (64) generally parallel to the first track path (46) and the second track path (52).

7. The method of one of the claims 1 to 6, further comprising:
determining whether to skip the at least one intervening path (64) to track the second track path (52) based on the coverage of at least one of the vehicle (12) and the second vehicle (80,230).

8. The method of one of the claims 1 to 7, further comprising:
determining coverage by at least one of the vehicle (12) and the second vehicle (80, 230) in an adjacent track path on a right side or a left side of the vehicle (12);
skipping at least one right side intervening path based on coverage by the at least one of the vehicle (12) and the second vehicle (80, 230) on the right side of the vehicle (12); and
skipping at least one left side intervening path based on coverage by the at least one of the vehicle (12) and the second vehicle (80, 230) on the left side of the vehicle (12).

9. The method of one of the claims 1 to 8, wherein the curved turn path (56) comprises a transitional turn path portion (130), each of the plurality of track paths (36) comprises a track spacing, and creating the curved turn path (56) comprises spacing the transitional turn path portion (130) from the headland boundary edge (40) by at least half of the track spacing.

10. A system (10) for planning a path of a vehicle (12), the system comprising:
a coverage monitor (60) configured to monitor coverage by at least one of the vehicle (12) and a second vehicle (80, 230);
a headland region identifier (78) configured to establish a headland region (26) of one or more headland passes (38) in a work area (32) between an exterior boundary (30) and a headland boundary edge (40) defined by the one or more headland passes (38);
a track path identifier (76) configured to establish a plurality of track paths (34) extending in a generally parallel relationship and having a plurality of track path ends (36) disposed at an inner headland pass (38) of the headland region (26), the inner headland pass (38) having an edge defining the headland boundary edge (40);
a turn start intersection point generator (42) configured to determine a turn start intersection point (44) of a first track path (46) of the plurality of track paths (34) and the inner headland pass (38) at its corresponding edge;
a turn end intersection point generator (48) configured to determine a turn end intersection point (50) of a second track path (52) of the plurality of track paths and the inner headland pass (38) at its corresponding edge; and
a curved turn path generator (54) configured to establish a curved turn path (56) from the turn start intersection point (44) to the turn end intersection point (50) based on the coverage by the at least one of the vehicle (12) and the second vehicle (80, 230) .

11. The system (10) of claim 10, wherein the curved turn path generator (54) is further configured to establish the curved turn path (56) to follow a curve of the edge of the inner headland pass (38) such that a vehicle swath remains in the headland region (26) while the vehicle (12) traverses the curved turn path (56).

12. The system (10) of claim 10 or 11, wherein the turn end intersection point generator (48) cooperates with the coverage monitor (60) to determine whether to execute a right turn or a left turn to establish the second track path (52).

13. The system (10) of claim 10, wherein the turn end intersection point generator (48) cooperates with the coverage monitor (60) to determine whether to skip an intervening path disposed adjacent to the first track path (46).
